# EUROPEAN PATENT SPECIFICATION

(11) **EP 2 298 630 B1**
(45) Date of publication and mention of the grant of the patent: **20.06.2012**
(21) Application number: 10175894.4
(22) Date of filing: 09.09.2010
(51) Int. Cl.: B62D 33/06

(54) **Seal between bunk and wall/inner panel in a vehicle**
Dichtung zwischen einer Querbaumwand- bzw. Innenplatte in einem Fahrzeug
Joint entre le berceau et le panneau mural/interne dans un véhicule

(30) Priority: 14.09.2009 SE 0950665
(43) Date of publication of application: 23.03.2011
(73) Proprietor: Scania CV AB, 151 87 Södertälje (SE)
(72) Inventor: Andersson, Anna, SE-151 44, SÖDERTÄLJE (SE); Holmlund, Kristina, SE-645 43, STRÄNGNÄS (SE); Karlsson, Olov, SE-152 52, SÖDERTÄLJE (SE); Bergström, Mårten, SE-117 27, STOCKHOLM (SE); Magnusson, Rickard, SE-126 39, HÄGERSTEN (SE); Pernius, Per, SE-579 40, BERGA (SE); Karlsson, Stefhan, SE-640 34, SPARREHOLM (SE); Zetterqvist, Matz, SE-611 61, NYKÖPING (SE)

(56) References cited:
- WO-A1-2009/054798
- GB-A- 1 538 525

## Description

### TECHNICAL FIELD

The present invention relates to a device pertaining to a bunk in a vehicle, e.g. a bunk of adjustable width, and in particular to a seal which minimises or eliminates the crack or gap between the bunk and the wall in the vehicle against which the bunk is fitted. The invention relates particularly to a seal which is associated with the vehicle's inner panel and which extends towards and connects to an inner long side of the bunk.

### STATE OF THE ART

Particularly in heavy/commercial vehicles it is desirable to provide a bunk in the cab to enable the driver to rest during long journeys/assignments. The bunk is usually situated behind the front row of seats, i.e. behind the driving and passenger seats. It is advantageous if the bunk can be narrowed, compressed, when not in use, so that the driving seat can unobstructedly be placed in such a position, possibly pushed far back, as to provide the driver with a good and comfortable driving posture. It is also advantageous if the bunk can be widened, expanded, when it is to be used for resting, since it will thus provide better comfort for the resting person. The bunk may also partly serve as an extra sitting location, e.g. when the vehicle is stationary, during breaks, etc. At such times it is primarily the central portion of the bunk which will be usable as a surface to sit on, since it is readily accessible between the front seats. If the bunk is used as a sitting location, it is advantageous if its springing is then slightly harder than when used for resting, to which end the bunk will need to be in a compressed state in which the springs in the mattress are closer together. The compressed state will also result in more legroom relative to the remainder of the cab interior, the instrument panel etc. Bunks of variable and adjustable width are already known and are not described in more detail here.

A problem with such known bunks of adjustable width is that the upper fabric of the bunk, the top layer, but also the mattress and its filling, must be able to accompany the bunk when it is widened and when it is pushed together. This is usually achieved by using suitable mechanisms to draw the upper fabric and, where applicable, the filling forward and back past/across the inner edge of the bunk, i.e. downwards or upwards in the crack or gap between the bunk and the cab's inner panel which the bunk is adjacent to. The fabric itself needs not be extendable or stretchable but needs in all positions to be kept taut across the bunk by said mechanisms.

As it is desirable to be able to fold up the bunk and thereby provide access to the space under it which may be used for storage of various objects, special hinges or pivot means are usually provided between the bunk and the wall/inner panel and are preferably associated with brackets fastened in the underside of the bunk. These brackets and hinges are so configured that they create a certain space, a crack or gap, between the bunk and the wall/inner panel. Objects such as documents, newspapers, books, tools etc. placed on the bunk may accidentally fall down off the bunk via this gap. A draught which is uncomfortable for a person lying or resting on the bunk may occur via the gap, and the resting person may inadvertently come into contact with plastic and metal parts situated in the gap in the form of the bunk's fastening devices, hinges etc. These parts may feel sharp-edged and cold, to the possible discomfort of the resting person.

Prior art is referred to inter alia in GB1538525, which describes a vehicle cab with a rear seat composed of a bunk and a backrest. The bunk is optionally movable between a resting forward position and a sitting rear position. In the sitting position the bunk is close to the rear wall in the cab, thereby providing sufficient legroom between the bunk and the rear side of the front seats. In the resting position the bunk is at a greater distance from the cab's rear wall and this distance is covered by a stretched portion of fabric which may for example be the same fabric as serves as the bunk's top layer. It is specified that this fabric can be rolled up, but there is no indication of how this is done. A significant disadvantage of that solution is that the actual bunk in its pulled-out, expanded, state is not really wider, since there is then no mattress and hence no support in the region nearest to the wall. This region is only covered by fabric and therefore provides no support from below, with consequent risk of uncomfortable lying posture and poor sleeping comfort for the user. Another deficiency is that the device described can hardly keep the fabric on the bunk taut in the pushed-in, compressed, state of the bunk, resulting in an impression of qualitatively imperfect design.

A further noticeable document is WO-A-2009/054798, which disclosure covers the preamble features of claim 1.

The state of the art in this field thus does not solve the problem how to simply, automatically and safely cover the crack or gap associated with a vehicle bunk of the kind indicated in the introduction, particularly when the bunk is in an unfolded state and has to serve as a resting location, and how at the same time to allow the upper layer/fabric on the bunk to be stretched and adapted to different bunk width settings.

### SUMMARY OF THE INVENTION

The main object of the invention is to solve the above problem and propose a seal of the kind indicated in the introduction which easily and safely seals the gap and prevents objects from totally or partially making their way down into the gap, but which still allows the bunk's upper top layer/fabric to pass and be kept taut when the bunk's width is altered, irrespective of whether the bunk is in its wide, expanded, state or its narrow, compressed, state.

A further advantage of the invention is that the seal should provide definite support for a person lying on the bunk and prevent the user from coming into contact with sharp-edged or cold portions of the bunk's or the cab's supporting structure.

These and other objects and advantages are achieved according to the invention by a device according to the features indicated in the characterising part of claim 1.

The invention thus relates to a seal substantially comprising a load-bearing element, e.g. made of ABS, and a soft element placed on the latter, e.g. made of polyether. The seal is of substantially the same length as the bunk and so configured that it can easily be fitted against the wall/inner panel close to a long inner side of the bunk. The seal is adapted to allowing the bunk's envelope, the upper fabric layer, to pass across the edge of a long side of the bunk which faces towards the wall/inner panel when the bunk's width is altered. The seal is adapted to being fitted to the inner panel in such a way that there is still an air gap between the inner panel and the outer panel and that the airflow therein is not hindered. The seal is substantially as wide or thick as the gap between the bunk and the wall/inner panel.

The advantages of this seal according to the invention comprise inter alia protecting the user from coming into contact with cold and sharp-edged metal portions of the bunk's or the cab's supporting structure, and preventing objects from dropping into the gap. The seal also allows deployment or retraction of fabric, and where applicable of filling, when the bunk's width is altered, and also allows the bunk to be folded up without problems. The seal also prevents air draughts through the gap which might cause discomfort for a person resting on the bunk, and does so without adverse effects on the cab's air conditioning in other respects. The seal may also be so fitted that it conceals inherent bulges or protrusions of the inner panel.

Further features and advantages of the invention are indicated by the more detailed description of the invention set out below and the accompanying drawings and other claims.

### BRIEF LIST OF THE DRAWINGS

The invention is described in more detail below in various preferred embodiment examples with reference to the attached drawings.
**Figure 1** depicts a view of a seal according to the invention which pertains to a bunk in a vehicle cab.
**Figure 2** depicts a section through the bunk and the seal in a finally fitted state.
**Figure 3** depicts a section through the seal in a fitted state showing how the seal abuts against the cab's inner panel and how clips extend through the inner panel and the air gap and fasten to the cab's frame structure.
**Figure 4** depicts a view of the seal's two main constituent parts separated, viz. the load-bearing element and the soft element.
**Figure 5** depicts a clip in more detail in an oblique side view.

### DESCRIPTION OF PREFERRED EMBODIMENTS

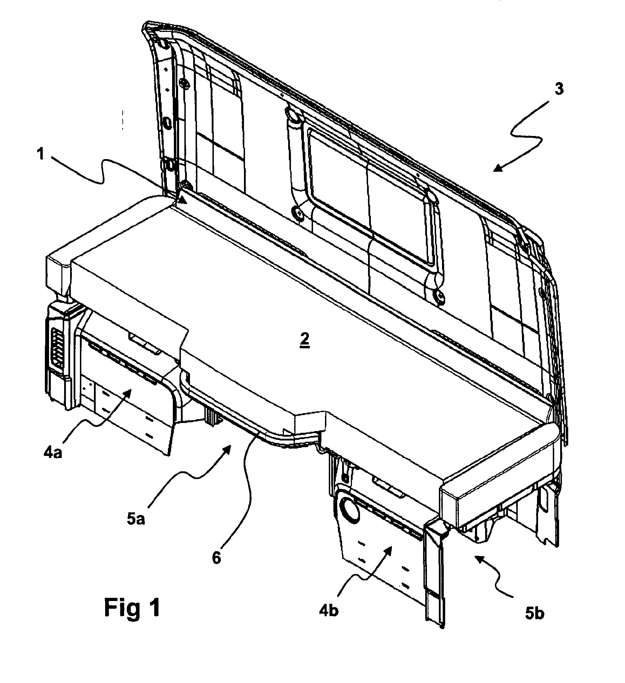

**Figure 1** depicts a seal 1 according to the invention which pertains to a bunk 2 situated in a vehicle cab 3 (the cab is depicted only partly). The bunk 2 rests on a supporting structure 4a,b which is situated in the cab 3 and in which various storage spaces 5a,b intended for, for example, tools, work clothes or other objects are provided. Usually a refrigerator (not depicted) is also situated in the middle of this supporting structure 4a,b. The bunk 2 is provided with a handle 6 by which the driver/user can pull out, expand, the bunk 2 to a lying state or push together, compress, the bunk 2 to a driving state which makes it possible for the driving seat to be moved to a pushed-back position to enhance the driver's driving comfort. The handle 6 may also be used to fold up the bunk 2, thereby allowing access to storage spaces 5a,b situated under the bunk 2.

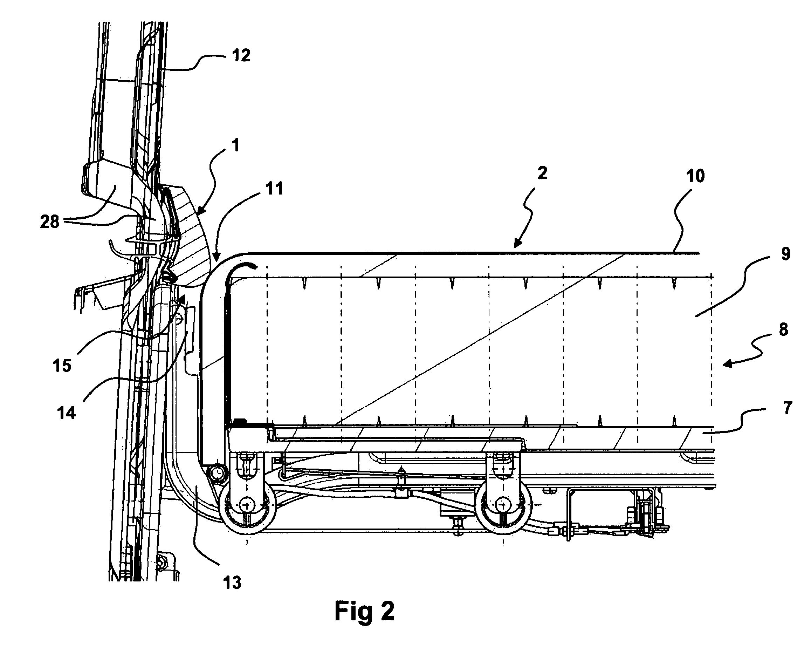

**Figure 2** depicts a cross-section through the bunk 2 and some of its fitting parts. The bunk 2 is provided with a bottom 7 made of rigid material, e.g. plywood, composite material, sheet metal or the like, and with a mattress 8 comprising a number of springing elements 9 enclosed in pockets. The springing elements 9 are distributed evenly in the mattress 8 irrespective of whether the bunk 2 is in its expanded or compressed state. To ensure that the surface layer 10, the upper fabric, of the bunk 2 will always be taut, a mechanism of known kind (not depicted in detail) is provided which stretches or draws the surface layer/fabric across and past an inner edge 11 of the bunk 2, i.e. across the edge 11 at the long side of the bunk 2 which faces towards the wall/inner panel 12 which the bunk 2 is adjacent to. A bracket 13 and a wall mounting 14 constitute one of the hinges of the bunk 2 and are disposed between the bunk 2 and the wall/inner panel 12. The fact that said bracket 13 and wall mounting 14 occupy a certain amount of space means that there is a crack or gap 15 between the bunk 2 and the wall/inner panel 12. To minimise or still better eliminate, actually cover, this gap 15, the seal 1 according to the invention is fitted against the inner panel 12 at the same height as the upper portion of the bunk 2 and is situated between the bunk 2 and the inner panel 12. The width of the seal 1 corresponds substantially to the width 15 of the gap between the bunk 2 and the wall/inner panel 12. The seal 1 exerts only a slight contact pressure against the bunk 2, to allow the bunk's envelope/surface layer 10 to pass the seal 1 without problems in either direction when the width of the bunk 2 is being altered. The seal 1 extends preferably along the whole length of the bunk 2, i.e. the whole extent of the bunk 2 in the vehicle's transverse direction.

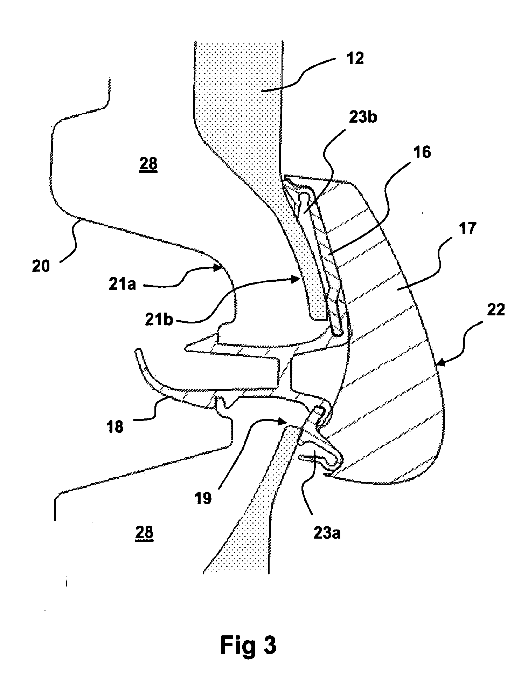

**Figure 3** depicts in more detail a section through the seal 1 in its fitted state. The seal 1 thus comprises a substantially rigid load-bearing element 16 and, placed on it, a soft element 17 in the form of a filling. The seal 1 is covered by a fabric (not depicted) and is fitted against the cab's rear inner panel 12 by means of a number of, e.g. three, clips 18 fastened in the load-bearing element 16. Each clip 18 extends through recesses 19 in the inner panel 12 and has its other end fastened by a snap function to the cab's frame structure 20, a steel sheet which is a few millimetres thick. The inner panel 12 is made in a conventional way of pressed fibre material, e.g. ground-down fabric, and the cab's frame structure 20 therefore usually comprises a pressed steel structure. The fabric used as surface layer on the seal 1 is preferably the same as that used for the bunk's upper layer 10. As the inner panel 12 may for constructional reasons have various protrusions or bulges 21, the seal 1 may be adapted and fitted so as to substantially cover these irregularities. The outer/forward surface 22 of the soft element 17 is uniform and smooth and therefore associates well with the edge 11 of the bunk 2 so that a good seal is achieved.

Figure 3 also shows how the seal's load-bearing element 16 abuts against the cab's inner panel 12 and how the clips 18 used for fitting extend through recesses 19 in the inner panel 12 and fasten in holes/recesses in the cab's outer frame structure 20. The cab's frame structure 20 is provided in this region with a protrusion or bulge 21a intended inter alia to stiffen the frame structure 20. Since for air conditioning comfort reasons it is necessary for air to circulate in an air gap 28 between the frame structure 20 and the inner panel 12, the inner panel 12 has also to be provided with a protrusion or bulge 21b so that a clear air passage is maintained between the inner panel 12 and the frame structure 20. The seal's load-bearing element 16 is so fitted that it covers the inner panel's bulge 21b in this region.

The load-bearing element 16 is also provided with grooves 23a,b for fastening the outer envelope/fabric (not depicted) intended to be stretched round the soft element 17.

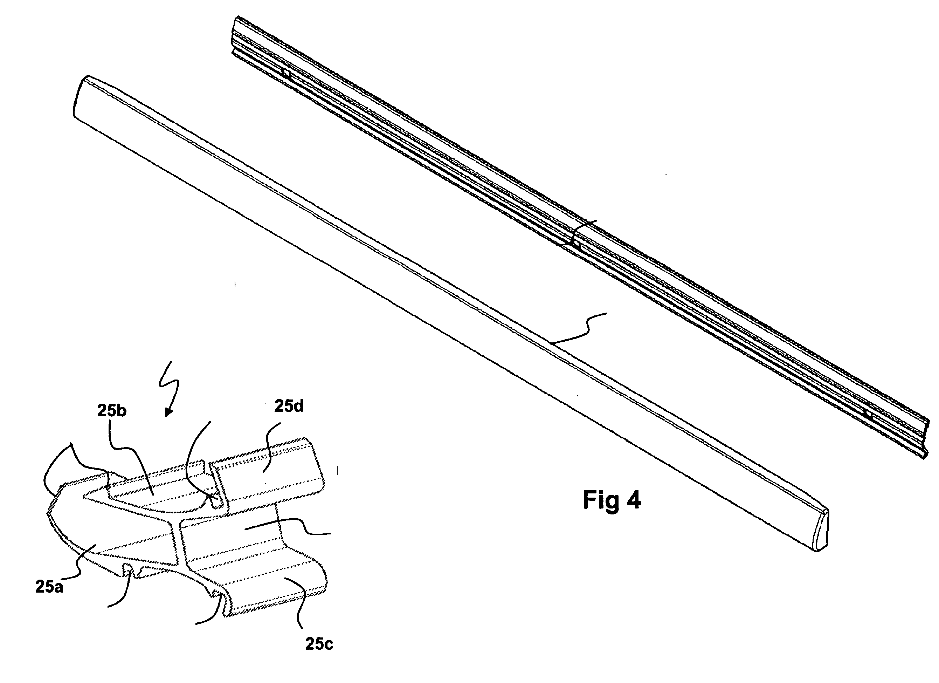

**Figure 4** depicts in more detail in a separated state the seal's load-bearing and soft elements as seen obliquely from in front. It also depicts the holes provided in the load-bearing element and intended for the fastening of clips, and the distribution of the holes.

**Figure 5** depicts the clip 18 in more detail. The clip 18 is for example made of POM and has a substantially long and narrow shape to make it possible to fit the seal 1 against the inner panel 12 but at spacing from the cab's outer frame structure 20. The clip 18 is H-shaped in cross-section and provided with a web 24 and, on each side of the web, two resilient flanges 25a-d, i.e. a total of four flanges, which have chamfers 26 and recesses 27 for fitting into, and being able to engage with, both the seal's load-bearing element 16 and the vehicle's outer frame structure 20. When the clip 18 is pushed into position, the resilient flanges 25 snap firmly into portions of the surrounding structure.

## Claims

1. A seal (1) for minimising or eliminating the crack or gap (15) which occurs between a bunk (2) of variable/adjustable width, and an outer layer (10) of the bunk (2), the bunk being intended for a vehicle cab, and the wall or inner panel (12) against which the bunk (2) is fitted,
**characterised**
- **in that** the seal (1) comprises a relatively rigid load-bearing element (16) and, placed on the latter, a soft element (17),
- that the seal (1) is adapted to being fitted against the vehicle's wall or inner panel (12) along a long side or edge (11) of the bunk in such a way that the seal (1) adjoins the bunk (2), at least in the latter's unfolded state,
- that the width of the seal (1) corresponds substantially to the width of the gap (15) between the bunk (2) and the wall/inner panel (12) and therefore seals the gap (15),
- that the seal (1) is adapted, when the width of the bunk is being altered, to allowing the bunk's outer layer (10) to pass unhindered across the edge (11) at the bunk's long side which faces towards the wall/inner panel (12), and
- that the seal (1) allows the bunk (2) to be folded up.

2. A seal (1) according to claim 1,
**characterised**
- **in that** the seal (1) is adapted to abutting against the vehicle's inner panel but being fitted to the cab's frame structure (20) without the airflow in the air gap (28) between the inner panel (12) and the frame structure (20) being hindered.

3. A seal (1) according to claim 2,
**characterised**
- **in that** mounting means in the form of clips (18) are provided in the seal's load-bearing element (16), are intended to fasten the seal (1) to the cab's frame structure (20) via recesses (19) provided in the vehicle's inner panel (12), and are adapted to extending across the air gap (28).

4. A seal (1) according to claim 3,
**characterised**
- **in that** the clip (18) has a substantially H-shaped cross-section and is provided with four resilient flanges (25a-d) in which recesses (27) are provided for easy fitting to the load-bearing element (16) of the seal (1) and to the frame structure (20).

5. A seal (1) according to claim 3,
**characterised**
- **in that** the clips (18) are made of POM.

6. A seal (1) according to any one of the foregoing claims,
**characterised**
- **in that** the seal (1) has a length substantially corresponding to the length of the bunk (2).

7. A seal (1) according to any one of the foregoing claims,
**characterised**
- **in that** the seal's soft element (17) is made of polyether.

8. A seal (1) according to any one of the foregoing claims,
**characterised**
- **in that** the soft element (17) of the seal (1) is clad in an envelope of fabric.

9. A seal (1) according to any one of the foregoing claims,
**characterised**
- **in that** the load-bearing element (16) of the seal (1) is made of ABS.

## Patentansprüche

1. Dichtung (1) zum Minimieren oder Eliminieren des Risses oder der Lücke (15), der/die zwischen einer Koje (2) von variabler/einstellbarer Breite auftritt, und einer Außenschicht (10) der Koje (2), wobei die Koje für eine Fahrzeugkabine bestimmt ist, und der Wand oder dem Innenblech (12), gegen die/das die Koje (2) angebracht ist, **dadurch gekennzeichnet,**
- **dass** die Dichtung (1) ein relativ starres lasttragendes Element (16) umfasst und, auf Letzterem angeordnet, ein weiches Element (17),
- **dass** die Dichtung (1) angepasst ist, gegen die Wand oder das Innenblech (12) des Fahrzeugs entlang einer langen Seite oder Kante (11) der Koje derart angebracht zu werden, dass die Dichtung (1) an die Koje (2) anliegt, zumindest in heruntergeklapptem Zustand der Letzteren,
- **dass** die Breite der Dichtung (1) im Wesentlichen der Breite der Lücke (15) zwischen der Koje (2) und der Wand/dem Innenblech (12) entspricht und demzufolge die Lücke (15) abdichtet,
- **dass** die Dichtung (1) angepasst ist, wenn die Breite der Koje verändert wird, der Außenschicht (10) der Koje zu erlauben, ungehindert über die Kante (11) an der der Wand/dem Innenblech (12) zugewandten, langen Seite der Koje zu laufen, und
- **dass** die Dichtung (1) der Koje (2) erlaubt, hochgeklappt zu werden.

2. Dichtung (1) nach Anspruch 1,
**dadurch gekennzeichnet,**
- **dass** die Dichtung (1) angepasst ist, an dem Innenblech des Fahrzeugs anzuliegen, aber an die Rahmenkonstruktion (20) der Kabine angebracht zu sein, ohne dass der Luftstrom in dem Luftspalt (28) zwischen dem Innenblech (12) und der Rahmenkonstruktion (20) gehindert wird.

3. Dichtung (1) nach Anspruch 2,
**dadurch gekennzeichnet,**
- **dass** Befestigungsmittel in der Form von Klemmen (18) in dem lasttragenden Element (16) der Dichtung vorgesehen sind, bestimmt sind, die Dichtung (1) an der Rahmenkonstruktion (20) der Kabine mittels Aussparungen (19), die in dem Innenblech (12) des Fahrzeugs vorgesehen sind, zu befestigen, und angepasst sind, sich über den Luftspalt (28) zu erstrecken.

4. Dichtung (1) nach Anspruch 3
**dadurch gekennzeichnet,**
- **dass** die Klemme (18) einen im Wesentlichen H-förmigen Querschnitt aufweist und mit vier elastischen Flanschen (25a-d) versehen ist, in welchen Aussparungen (27) vorgesehen sind zum einfachen Anbringen an das lasttragende Element (16) der Dichtung (1) und an die Rahmenkonstruktion (20).

5. Dichtung (1) nach Anspruch 3,
**dadurch gekennzeichnet,**
- **dass** die Klemmen (18) aus POM gefertigt sind.

6. Dichtung (1) nach einem der vorhergehenden Ansprüche,
**dadurch gekennzeichnet,**
- **dass** die Dichtung (1) eine Länge hat, die im Wesentlichen der Länge der Koje (2) entspricht.

7. Dichtung (1) nach einem der vorhergehenden Ansprüche,
**dadurch gekennzeichnet,**
- **dass** das weiche Element (17) der Dichtung aus Polyether gefertigt ist.

8. Dichtung (1) nach einem der vorhergehenden Ansprüche,
**dadurch gekennzeichnet,**
- **dass** das weiche Element (17) der Dichtung (1) in eine Hülle aus Stoff gekleidet ist.

9. Dichtung (1) nach einem der vorhergehenden Ansprüche,
**dadurch gekennzeichnet,**
- **dass** das lasttragende Element (16) der Dichtung (1) aus ABS gefertigt ist.

## Revendications

1. Joint (1) pour minimiser ou éliminer la fissure ou l'espace (15) qui se produit entre une couchette (2) de largeur variable/réglable, et une couche extérieure (10) de la couchette (2), la couchette étant conçue pour une cabine de véhicule, et la paroi ou le panneau intérieur (12) contre lequel est adaptée la couchette (2),
**caractérisé :**
- **en ce que** le joint (1) comprend un élément de support de charges relativement rigide (16), et, disposé sur ce dernier, un élément mou (17),
- **en ce que** le joint (1) est adapté de façon à être reçu contre la paroi ou le panneau intérieur (12) du véhicule le long d'une longueur ou d'un bord (11) de la couchette, de telle sorte que le joint (1) soit réuni à la couchette (2), au moins dans l'état déplié de cette dernière,
- **en ce que** la largeur du joint (1) correspond sensiblement à la largeur de l'espace (15) entre la couchette (2) et la paroi/panneau intérieur (12), et scelle par conséquent l'espace (15),
- **en ce que** le joint (1) est adapté, lorsque la largeur de la couchette est altérée, de façon à permettre à la couche extérieure (10) de la couchette de passer sans être gênée sur le bord (11) dans la longueur de la couchette qui est dirigée vers la paroi/panneau intérieur (12), et
- **en ce que** le joint (1) permet à la couchette d'être repliée.

2. Joint (1) selon la revendication 1,
**caractérisé :**
- **en ce que** le joint (1) est adapté de façon à buter contre le panneau intérieur du véhicule, mais en étant adapté à la structure de caisse (20) de la cabine sans que l'écoulement d'air dans l'espace d'air (28) entre le panneau intérieur (12) et la structure de caisse (20) ne soit gêné.

3. Joint (1) selon la revendication 2,
**caractérisé :**
- **en ce que** des moyens de montage sous la forme d'attaches (18) sont disposés dans l'élément de support de charges (16) du joint, ceux-ci étant conçus de façon à fixer le joint (1) à la structure de caisse (20) de la cabine par l'intermédiaire de cavités (19) réalisées dans le panneau intérieur (12) du véhicule, et étant adaptés de façon à s'étendre à travers l'espace d'air (28).

4. Joint (1) selon la revendication 3,
**caractérisé :**
- **en ce que** l'attache (18) a une section transversale sensiblement en forme de H et est munie de quatre flasques élastiques (25a à d) dans lesquels sont réalisées des cavités (27) pour une adaptation facile à l'élément de support de charges (16) du joint (1) et à la structure de caisse (20).

5. Joint (1) selon la revendication 3,
**caractérisé :**
- **en ce que** les attaches (18) sont réalisées en polyoxyméthylène.

6. Joint (1) selon l'une quelconque des revendications précédentes, **caractérisé :**
- **en ce que** le joint (1) a une longueur correspondant sensiblement à la longueur de la couchette (2).

7. Joint (1) selon l'une quelconque des revendications précédentes, **caractérisé :**
- **en ce que** l'élément mou (17) du joint est réalisé en polyéther.

8. Joint (1) l'une quelconque des revendications précédentes, **caractérisé :**
- **en ce que** l'élément mou (17) du joint (1) est enveloppé dans une enveloppe de tissu.

9. Joint (1) selon l'une quelconque des revendications précédentes, **caractérisé :**
- **en ce que** l'élément de support de charges (16) du joint (1) est réalisé en acrylonitrile-butadiène-styrène.
